# EUROPEAN PATENT SPECIFICATION

(11) **EP 0 976 614 B1**
(45) Date of publication and mention of the grant of the patent: **19.11.2003**
(21) Application number: 99830482.8
(22) Date of filing: 27.07.1999
(51) Int. Cl.: B60R 1/00

(54) **Extra mirror for augmenting visibility**
Zusatsspiegel zur Sichtverbesserung
Miroir supplémentaire pour augmenter la visibilité

(30) Priority: 27.07.1998 IT NA980032 U
(43) Date of publication of application: 02.02.2000
(73) Proprietor: Vaiano, Giuseppe, 80041 Boscoreale, Napoli (IT)
(72) Inventor: Vaiano, Giuseppe, 80041 Boscoreale, Napoli (IT)

(56) References cited:
- EP-A- 0 122 811
- WO-A-93/24345
- DE-A- 1 928 511
- DE-A- 3 718 392
- DE-U- 8 609 701
- FR-A- 2 141 450
- FR-A- 2 467 736
- GB-A- 2 315 720

## Description

### Technical field

The technical sector to which this invention could be of interest is the automobile industry.

### Background art

The necessity for an automobile driver to have good visibility is well known, especially in proximity to road junctions and when carrying out particular maneuvers where there is a high risk of accidents. Unfortunately, the normal mirrors placed laterally and close to the driver only allow a narrow range of lateral-posterior vision (about 15°). UK patent Application GB 2315720A Josef Petr Prokopius " Side-viewing mirror unit for motor vehicles " discloses a device according to the preamble of claim 1. It describes a side-viewing mirror for a vehicle comprising one or more, plane or convex, mirror surfaces arranged in the vertical plane with the reflective surfaces facing sideways at angles of about 45° to allow the driver sideways viewing of approaching traffic when entering a road from a place with restricted sideways view. The mirror may be angularly adjusted, manually or remotely, and may retract into a recess. An aerodynamically shaped cover may be provided.

### The object and important characteristics of the invention

The aim of this invention is that of bettering the driver's range of vision by notably widening the lateral sector view up to 90° (or even more) both to the left and to the right.

The device should preferably be placed on the forward part of the car, below the hood, but it can also be situated on the rear.

### Description of the drawings and mode for carryng out the invention

The device is made up of a cover (1) which is level with the surface of the car body (when it is lowered), and which can be raised or lowered around its axle (2) by an electric motor (3) and a drive shaft (4). The reflecting plate (5) is connected to the aforesaid cover (1) through means of support (6) and means of articulation (7), hinged plates, sliding stabilizing runners (8), sliding runners for inspections (9), and by a reflecting plate holder (1) which permits the mirror to be substituted. The reflecting plate (5) can be rotated around the Z axle by the motor (11) and the activator (12) in order to find the optimum functioning angle. The device can be activated from inside the car by pressing a button that consents the device to be moved from an open and functioning position, in which it protrudes above the profile of the car body, to a lowered, non-functioning position when it is stored inside the compartment (13) in the hood itself. Another button inside the car controls the rotation around the Z axle of the reflecting plate (5), which, due to the bonds used, is not subject to vibration. The closing maneuver of replacing the device inside the automobile hood can be carried out whether the mirror is in an intermediate position or in the end of run position to the left or to the right.

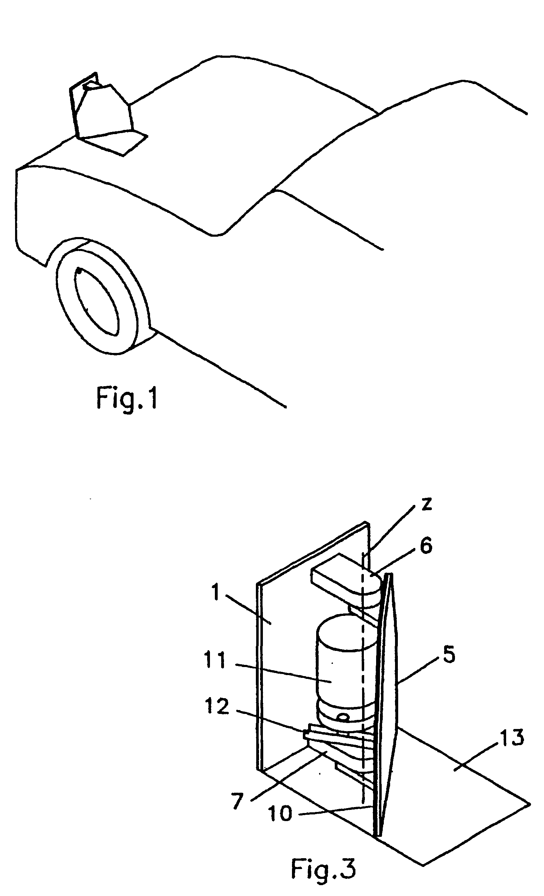

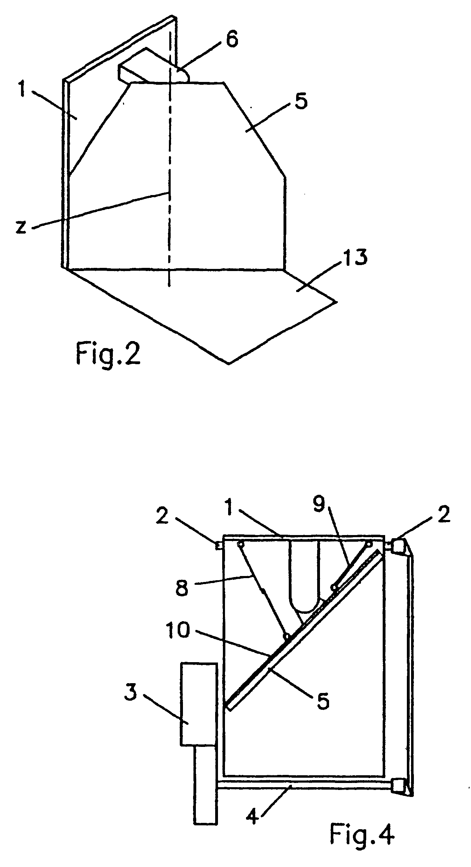

## Claims

1. A device which aims to amplify the left or right lateral visual sectors of an automobile,
wherein the device is situated in a hidden compartment (13) inside the hood of an automobile and can be activated electrically from inside the automobile by simply pressing a button that will bring the device into its open and functioning position, in which it protrudes above the level of the automobile's hood, and to a lowered and non-functioning position inside the compartment (13), wherein the part of the device which can be stored inside the structure of the automobile is hidden by a cover (1); another button controls the rotation of the reflecting plate (5), which constitutes the visualizing surface of the device, around the Z axle (z) into a position in which the driver's visual field is widened up to 90° to the left or the right of the automobile,
**characterized in that**
the cover (1), when it is lowered, is level with the automobile's hood and can be raised or lowered around its axle (2) by an electric motor (3) and a drive shaft (4);
wherein the reflecting plate (5), hinged plates, stabilizing sliding runners (8) and inspection runners (9), and a reflecting plate holder (10), which allows the plate (5) to be substituted, are connected to the aforesaid cover (1 ) by means of support (6) and articulation (7);
wherein the reflecting plate (5) can be rotated around the Z axle (z) by an electric motor (11 ) and an activator (12).

2. A device as described in claims 1), **characterized by** the fact that the maneuver of closing the mirror inside the compartment (13) can be carried out at any time, even if the mirror is in an intermediate position to the left or right end of run position.

## Patentansprüche

1. Eine Vorrichtung, die darauf abzielt, die linken oder rechten seitlichen Sichtsektoren eines Automobils zu verstärken, worin die Vorrichtung in einem versteckten Fach (13) innerhalb der Haube eines Automobils aufgestellt wird und aus dem Automobil heraus elektrisch aktiviert werden kann, durch eine Taste einfach betätigen, die die Vorrichtung in seine geöffnete und arbeitende Position, in dem es über dem Niveau der Haube des Automobils hervorsteht und in eine gesenkte und nicht-non-functioning Position innerhalb des Faches (13) holt, worin das Teil der Vorrichtung, die innerhalb der Struktur des Automobils gespeichert werden kann wird versteckt durch eine Abdeckung ( 1 ); eine andere Taste steuert die Umdrehung der reflektierenden Platte (5), die die Sichtbar machenoberfläche der Vorrichtung, um die z-Welle (Z) in eine Position festsetzt, in der das Sichtfeld des Treibers bis zu 90 rechts das °links oder des Automobils verbreitert wird,
charakterisiert darin
die Abdeckung (1), wenn sie heruntergelasse wird, ist mit der kapuze des Automobils waagerecht ausgerichtet und kann um seine achse (2) durch einen Elektromotor (3) und eine Antriebsachse (4) angehoben werden oder gesenkt werden;
worin die reflektierende Platte (5), die eingehängten Platten, stabilisierend, Läufer (8) und Kontrollenläufer (9) und einen reflektierenden Plattenhalter (10) schiebend, das erlaubt, daß die Platte (5) ersetzt wird, an die vorher erwähnte Abdeckung (1) mittels Trägers (6) und Artikulation (7) angeschlossen werden; worin die reflektierende Platte (5) um die z-Welle (Z) durch einen Elektromotor (11) und einen Aktivator (12) gedreht werden kann.

2. Ein Gerat wie darin beschrieben, behauptet 1, charakterisierte durch die Tatsache, daf3 das Manover, den Spiegel im Fach (13) zu schlieBen, zu jeder Zeit herausgetragen werden kann, auch wenn der Spiegel in einer dazwischenliegenden Position nach links ist, oder direkt Ende von Laufposition.

## Revendications

1. Un appareil qui a l'intention d'amplifier la gauche ou droit secteurs visuels latéraux d'une automobile, où l'appareil est situé dans un compartiment caché (13) à l'intérieur du carrosserie d'une automobile et peut être activé électriquement d'à l'intérieur de l'automobile en pressant simplement un bouton qui mettra l'appareil à fonctionner ouvert place que il sort au-dessus le niveau du carrosserie de l'automobile, et non-fonctionnant place baissé et place à l'intérieur du compartiment (13), où la partie de l'appareil qui peut être entreposé à l'intérieur de la structure de l'automobile est caché par un couvercle (1); un autre bouton contrôle la rotation de la plaque réflectrice (5) qui constitue la visualisant surface de l'appareil autour de l'essieu du Z (z) dans une place dans laquelle le champ visuel du conducteur est élargi à gauche ou le droit de l'automobile jusqu'à 90°, caractérisé dans cela
l'abri (1), quand il est baissé, est égal avec le carrosserie de l'automobile et peut être élevé ou a baissé autour de son essieu (2) par un moteur électrique (3) et un arbre de la trasmission (4); où la plaque réflectrice (5), plaques à charnière et glissants des stabiliser (8) et coureurs de l'inspection (9), et un détenteur de la plaque réflecteur (10) qui autorise la plaque (5) être substitué, est relié à couvercle susmentionné (1) au moyen de support (6) et articulation (7); où la plaque réflectrice (5) peut être tourné autour de l'essieu du Z (z) par un moteur électrique (11) et un activateur (12).

2. Un appareil comme décrit dans les demandes 1) **caractérisé par le fait que** la manoeuvre de fermer le miroir à l'intérieur du compartiment (13) peut être fait ou ne pas fait, même si le miroir est dans une place intermédiaire fin de place de la course à gauche ou droit.
